# EUROPÄISCHE PATENTANMELDUNG

(11) **EP 1 112 794 A2**
(43) Veröffentlichungstag der Anmeldung: **04.07.2001**
(21) Anmeldenummer: 00128463.7
(22) Anmeldetag: 23.12.2000
(51) Int. Cl.: B23B 5/16

(54) **Schälwerkzeug zum Schälen eines Kabels oder Rohres, insbesondere Kunststoffrohr oder kunststoffbeschichtetes Rohr**

(30) Priorität: 30.12.1999 DE 29922892 U; 02.06.2000 DE 20009934 U
(71) Anmelder: Golletz, Paul T., 61348 Bad Homburg (DE)
(72) Erfinder: Golletz, Paul T., 61348 Bad Homburg (DE)
(74) Vertreter: Mierswa, Klaus, Dipl.-Ing.

(57) **Zusammenfassung**

Die Erfindung betrifft ein Schälwerkzeug zum Abschälen der äußeren Sicht oder Schichten eines Kabels oder Rohres, z.B. Oxidschichten, eines Rohres oder Isolierschicht eines Elektrokabels. Ein erfindungsgemäßes Schälwerkzeug umfaßt ein Unterteil und ein Oberteil, die schraubzwingenartig relativ zueinander bewegt werden können. Sowohl das Oberteil als auch das Unterteil weisen Rollen auf, die zusammen ein Aufnahmelager für ein Kabel bzw. Rohr bilden. Am Oberteil ist ferner ein Messer angebracht, dessen Schnittkante die Rollen des Oberteils überragt und ein Gefälle gegenüber der Kabel- bzw. Rohrachse aufweist. Hierdurch ist es möglich, beliebige Bereiche der Kabel- bzw. Rohroberfläche abzuschälen.

## Beschreibung

### Technisches Gebiet:

Die Erfindung betrifft ein Schälwerkzeug mit zwei schraubzwingenartig relativ zueinander verstellbaren Teilen zum Schälen eines Rohres, insbesondere eines solchen, das aus Kunststoff besteht oder eine Mantelschicht aus Kunststoff oder eine glasfaserverstärkte Schicht aufweist, oder eines Kabels, insbesondere dessen Mantel- oder Isolierschicht.

### Stand der Technik:

In vielen Fällen, z.B. um Anschweißungen vornehmen zu können, ist es wünschenswert oder erforderlich, zumindest einen Teil einer äußeren Schicht, insbesondere eine Oxidschicht, von Rohren der eingangs genannten Art zu entfernen. In anderen Fällen ist es wünschenswert oder erforderlich, zumindest einen Teil einer äußeren Schicht von Kabeln, insbesondere der Mantel- oder Isolierschicht von Elektrokabeln, zu entfernen. Aus der DE 295 16 513.8 ist ein Schälgerät mit verfahrbarem Dorn und zwei schraubzwingenartig gegeneinander verschiebbaren Teilen bekannt. Bei diesem Gerät ist innerhalb des durch ein Prismen- oder Rollenlager des einen Zwingenteils und ein Gegenlager des anderen Zwingenteils gebildeten Aufnahmelagers ein Dorn angeordnet, der einen in Richtung seiner Längsachse sich erstreckenden zylindrischen Fortsatz aufweist, der das Aufnahmelager überragt und dessen Durchmesser dem lichten Innendurchmesser des Rohres entspricht. Das Rohr wird in axialer Richtung auf den Fortsatz aufgeschoben und nahe seines Endes durch den in dieser Richtung verfahrbaren Dorn bearbeitet.

Ein Nachteil des in der DE 295 16 513.8 beschriebenen Gerätes besteht darin, daß konstruktionsbedingt nur die Endbereiche eines Rohres bearbeitet werden können, wobei die axiale Ausdehnung der bearbeiteten Fläche durch den Verfahrweg des Dorns begrenzt ist.

Der Erfindung liegt demzufolge die Aufgabe zugrunde, ein Schälwerkzeug bereitzustellen, mit dem beliebig wählbare und beliebig ausgedehnte Bereiche der äußeren Schicht oder Schichten eines Kabels oder Rohres der eingangs genannten Art abgeschält werden können.

Diese Aufgabe wird erfindungsgemäß gelöst durch ein Schälwerkzeug in Form einer Zwinge, mit einem Messer, das eine Schnittkante aufweist, zum Schälen einer äußeren Schicht oder Schichten eines Kabels oder Rohres, insbesondere Kunststoffrohr oder kunststoffbeschichtetes Rohr, umfassend ein Unterteil mit einem zwei vordere untere Rollen und zwei hintere untere Rollen aufweisendes Rollenlager und einen gegenüber dem Unterteil schraubzwingenartig verstellbaren Oberteil mit einem Gegenlager, welches zusammen mit dem Rollenlager ein Aufnahmelager zur Mehrpunktlagerung und Rundführung des Schälwerkzeugs bezüglich des Kabels oder Rohres bildet, dadurch gekennzeichnet, daß das Gegenlager eine erste obere Rolle und eine von dieser in Längsrichtung des Rohres beabstandete zweite obere Rolle aufweist, deren Achse mit derjenigen der ersten oberen Rolle fluchtet, wobei das Messer zwischen den oberen Rollen so angeordnet ist, daß seine Hauptebene parallel zu dieser Achse verläuft und die Schnittkante die oberen Rollen nach unten in Richtung des Kabels oder Rohres überragt und in der Richtung von der ersten oberen Rolle zur zweiten oberen Rolle gegenüber der Achse des Kabels oder Rohres ein Gefälle aufweist.

Zur Bearbeitung wird das Kabel bzw. Rohr in axialer Richtung in das Aufnahmelager eingeführt oder das erfindungsgemäße Schälwerkzeug so über das Kabel oder Rohr geschoben und so positioniert und ausgerichtet, daß sich der abzuschälende Bereich seiner Oberfläche, welcher sich erfindungsgemäß in beliebiger Entfernung zu einem Ende des Kabels bzw. Rohres befinden kann, im Bereich des Messers befindet. Anschließend wird das Oberteil beispielsweise mit Hilfe eines Spindeltriebes auf das Unterteil zubewegt, wodurch sich das Aufnahmelager verengt, bis die beiden oberen Rollen auf dem Kabel bzw. Rohr aufsetzen. Das Messer dringt hierbei in die Wandung des Kabels bzw. Rohres ein, da seine Schnittkante erfindungsgemäß über die oberen Rollen nach unten in Richtung des Kabels oder Rohres übersteht.

Wird nun das erfindungsgemäße Schälwerkzeug gegenüber dem Kabel oder Rohr in einem ersten Drehvorgang um einen bestimmten Drehwinkel oder um eine volle Umdrehung um die Rohrachse gedreht, so wird von der Kabel- bzw. Rohroberfläche eine Schicht definierter Stärke entsprechend dem Drehwinkel und der Länge der Schnittkante konzentrisch zur Kabel- bzw. Rohrachse abgeschält.

Die so entstandene erste Vertiefung in der Kabel- bzw. Rohrwandung ist in beiden axialen Richtungen jeweils durch eine Stufe von der unbearbeiteten Kabel- bzw. Rohroberfläche abgesetzt. In einer Ausführungsform der Erfindung ist das Messer gegenüber dem Oberteil höhenverstellbar.

Nach diesem ersten Drehvorgang wird das Messer durch entsprechendes Verstellen des Oberteils gegenüber dem Unterteil vom Kabel bzw. Rohr abgehoben. Anschließend wird das erfindungsgemäße Schälwerkzeug gegenüber dem Kabel bzw. Rohr um maximal die Länge der Schnittkante in diejenige Richtung verschoben, die der ansteigenden Richtung der Schnittkante des Messers und damit der Richtung von der zweiten oberen Rolle zur ersten oberen Rolle entspricht.

Anschließend wird das Oberteil erneut abgesenkt, bis beide Rollen des Gegenlagers auf dem Kabel bzw. Rohr aufsetzen. Die erste obere Rolle setzt dabei auf der unbearbeiteten Kabel- oder Rohroberfläche auf, die zweite obere Rolle jedoch innerhalb der Vertiefung.

Hierbei dringt das Messer erneut in die Kabel- bzw. Rohrwandung ein, wobei das der zweiten oberen Rolle zugewandte Ende des Messers in den einen Randbereich der bereits durch den ersten Drehvorgang geschaffenen ersten Vertiefung eindringt. Durch einen zweiten Drehvorgang, der analog zum oben beschriebenen ersten Drehvorgang ausgeführt wird, entsteht daher eine zweite Vertiefung, welche den einen Randbereich der ersten Vertiefung weiter vertieft und die durch eine Stufe vom übrigen Bereich der ersten Vertiefung abgesetzt ist.

Da das Messer erfindungsgemäß so angeordnet ist, daß die Schnittkante in der Richtung von der ersten zur zweiten oberen Rolle ein Gefälle aufweist, ist die Tiefe der zweiten Vertiefung an demjenigen ihrer Ränder, der der ersten oberen Rolle zugewandt ist, geringer als an demjenigen Rand, der der zweiten oberen Rolle zugewandt ist. Besteht der zweite Drehvorgang in einer vollen Umdrehung, so erhält der hierdurch bearbeitete Teil des Kabels bzw. Rohres daher eine konische äußere Form.

Nach dem zweiten Drehvorgang wird erneut das Messer vom Kabel bzw. Rohr abgehoben und das erfindungsgemäße Schälwerkzeug gegenüber dem Kabel bzw. Rohr wieder verschoben wie oben beschrieben. Anschließend wird das Oberteil erneut abgesenkt, bis beide Rollen des Gegenlagers auf dem Kabel bzw. Rohr aufsetzen, wobei die erste obere Rolle auf der unbearbeiteten Kabel- bzw. Rohroberfläche, die zweite obere Rolle hingegen innerhalb der zweiten Vertiefung aufsetzt.

Die Tiefe der zweiten Vertiefung nimmt erfindungsgemäß in der Richtung zur ersten Vertiefung zu, wie oben beschrieben wurde. Die mittlere Tiefe der durch einen dritten Drehvorgang entstehenden dritten Vertiefung ist daher durch die Wegstrecke, längs der das erfindungsgemäße Schälwerkzeug nach dem zweiten Drehvorgang gegenüber dem Kabel bzw. Rohr verschoben wurde, beeinflußt: je kürzer dieser Wegstrecke gewählt wird, desto größer ist die mittlere Tiefe der dritten Vertiefung. Bei geeigneter Anordnung des Messers am Oberteil kann durch geeignete Wahl dieser Wegstrecke wahlweise erreicht werden, daß die mittleren Tiefe dritten Vertiefung größer, gleich groß oder kleiner ist als die mittlere Tiefe der zweiten Vertiefung.

Durch entsprechende Wiederholung der beschriebenen Vorgänge kann somit erfindungsgemäß ein beliebig ausgedehnter Bereich der Kabel- bzw. Rohroberfläche abgeschält werden, wobei eine Aneinanderreihung von Vertiefungen mit sägezahnförmigem Querschnitt entsteht und die mittlere Tiefe jeder Vertiefung vorteilhafterweise durch entsprechende Wahl der jeweiligen Wegstrecke der Verschiebung des Schälwerkzeuges gegenüber dem Kabel bzw. Rohr beeinflußt werden kann.

Nach Beendingung des Abschälvorganges können die bei der Bearbeitung des Kabels bzw. Rohres entstandenen Sägezahn-Stufen geglättet werden, indem das erfindungsgemäße Schälwerkzeug um 180 Grad um seine vertikale Achse gedreht und das Rohr in umgekehrter Richtung nachbearbeitet wird.

Die Krafteinleitung aus der Spindel in den Unterteil erfolgt in einer bevorzugten Ausführungsform der Erfindung über ein elastisches Bauelement, z.B. eine Druckfeder oder ein Tellerfederpaket, so daß der Oberteil entgegen dessen Rückstellkraft auch ohne Drehung der Spindel um eine begrenzte Strecke gegenüber dem Unterteil angehoben werden kann, wobei sich das Aufnahmelager weitet. Eine solche Elastizität ermöglicht erfindungsgemäß insbesondere das Abschälen von Kabeln bzw. Rohren von unregelmäßig oder z.B. elliptisch verformter Querschnittsform, da die oberen Rollen bei der Ausführung einer Rotationsbewegung eines erfindungsgemäßen Schälgerätes um das Kabel bzw. Rohr unter Ausnutzung dieser Elastizität auch einer verformten Kabel- bzw. Rohroberfläche folgen kann.

Kurzbeschreibung der Zeichnung, in der zeigen:
- Fig. 1: eine Seitenansicht einer bevorzugten Ausführungsform eines erfindungsgemäßen Schälwerkzeuges mit einem zu bearbeitenden Rohr,
- Fig.2: eine gegenüber Fig. 1 um 90 Grad nach rechts gedrehte Rückansicht einer bevorzugten Ausführungsform eines erfindungsgemäßen Schälwerkzeuges mit einem zu bearbeitenden Rohr,
- Fig. 3: eine Vorderansicht des oberen Teils einer bevorzugten Ausführungsform eines erfindungsgemäßen Schälwerkzeuges mit einem zu bearbeitenden Rohr,
- Fig. 4: eine Ansicht des Unterteils eines erfindungsgemäßen Schälwerkzeuges von oben ohne Rohr bei abgenommenem Oberteil, und
- Fig. 5: eine gegenüber Fig. 3 vergrößerte Vorderansicht des Messerhalters, der oberen Rollen und des Messers gemäß einer bevorzugten Ausführungsform eines erfindungsgemäßen Schälwerkzeuges, wobei die Neigung des Messers übertrieben dargestellt ist.

### Wege zur Ausführung:

Die Figuren zeigen Ansichten einer bevorzugten Ausführungsform eines erfindungsgemäßen Schälwerkzeuges.

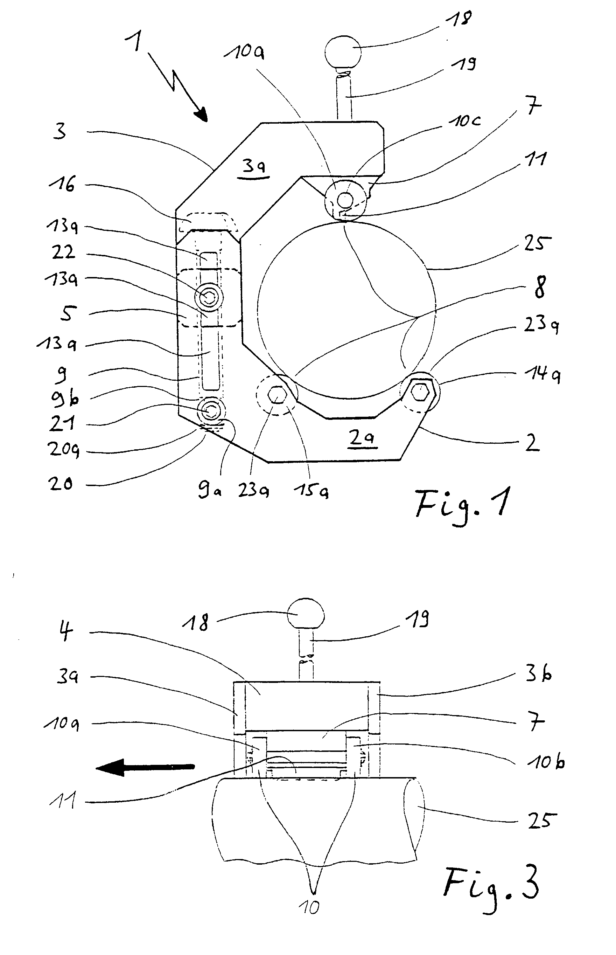

Fig. 1 zeigt eine Seitenansicht und Fig. 2 eine gegenüber Fig. 1 um 90 Grad nach rechts gedrehte Ansicht einer bevorzugten Ausführungsform eines erfindungsgemäßen Schälwerkzeuges. Ein erfindungsgemäßes Schälwerkzeug weist ein Unterteil 2 und einen gegenüber diesem schraubzwingenartig verstellbares Oberteil 3 auf. In einer bevorzugten Ausführungsform erfolgt die Verstellung durch eine vertikal verlaufende Spindel 9 mit Außengewinde, die am Unterteil 2 drehbar befestigt ist und mit Hilfe eines Spanngriffes 16 gedreht werden kann.

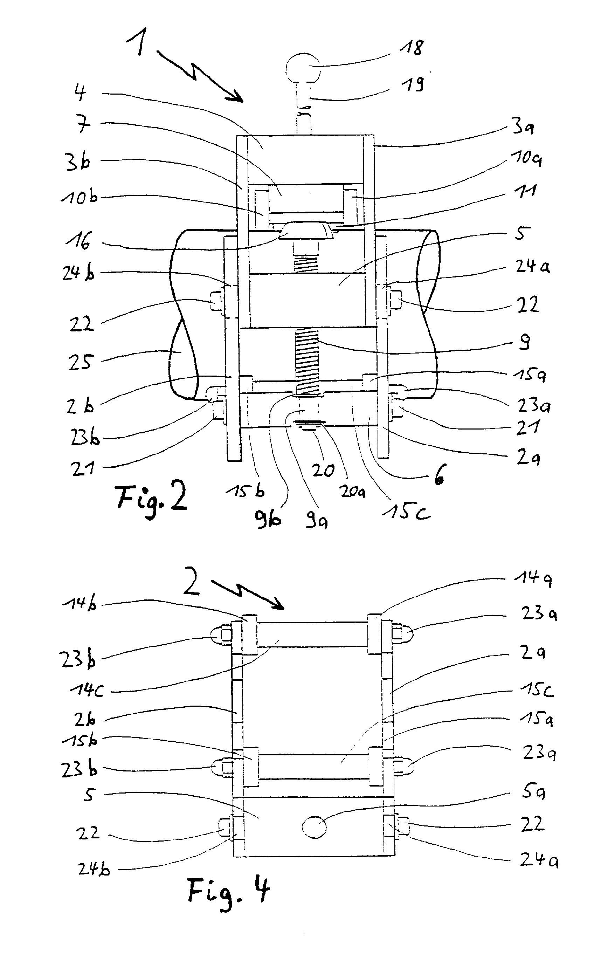

Das Unterteil 2 umfaßt in dieser Ausführungsform der Erfindung zwei parallel und einander gegenüberliegend angeordnete Seitenwände 2a, 2b (Fig. 2), welche jeweils mittels zweier Schrauben 21 an den Stirnseiten eines unteren Verbindungsstückes 6 befestigt und durch dieses voneinander beabstandet sind. Das untere Verbindungsstück 6 weist in einer bevorzugten Ausführungsform der Erfindung eine vertikal verlaufende Durchgangsbohrung auf, deren Zweck unten erläutert wird. Ferner umfaßt das Unterteil 2 zwei die Seitenwände 2a, 2b nach oben in Richtung des Rohres überragende vordere untere Rollen 15a, 15b (Fig. 4), welche durch eine vordere untere Achse 15c (Fig. 4) miteinander verbunden sind, sowie zwei die Seitenwände 2a, 2b nach oben in Richtung des Rohres überragende hintere untere Rollen 14a, 14b, welche durch eine hintere untere Achse 14c miteinander verbunden sind.

Die beiden unteren Achsen 14c, 15c verlaufen parallel und sind in einer bevorzugten Ausführungsform der Erfindung jeweils durch Lagerbolzen mit Schraubköpfen 23 (Fig. 4) an den Seitenwänden 2a, 2b des Unterteils 2 drehbar angebracht. Die Seitenwände 2a, 2b des Unterteils 2 weisen jeweils einen in vertikaler Richtung verlaufenden Schlitz 13a, 13b von konstanter Breite auf, dessen Funktion im folgenden noch erläutert wird.

Das Oberteil 3 umfaßt zwei parallel und einander gegenüberliegend angeordnete Seitenwände 3a, 3b, welche jeweils mittels nicht gezeigter Schrauben an den Stirnseiten eines mittleren Verbindungsstückes 5 und mittels weiterer nicht gezeigter Schrauben an den Stirnseiten eines oberen Verbindungsstückes 4 befestigt sind. Die Seitenwände 3a, 3b des Oberteils 3 sind durch das mittlere Verbindungsstück 5 und das obere Verbindungsstück 4 voneinander so beabstandet, daß der Abstand ihrer Außenflächen dem Abstand der Innenflächen der Seitenwände 2a, 2b des Unterteils 2 entspricht (Fig. 2).

Das mittlere Verbindungsstück 5 ist in einer bevorzugten Ausführungsform der Erfindung mit einer vertikalen Bohrung 5a (Fig. 4) versehen, die ein Innengewinde aufweist, dessen Aufgabe unten noch beschrieben wird. Das mittlere Verbindungsstück 5 weist ferner in einer bevorzugten Ausführungsform der Erfindung an seinen Stirnseiten je einen Vorsprung 24a, 24b auf (Fig. 2). Die Vorsprünge 24a, 24b greifen in die Schlitze 13a, 13b ein und stellen gemeinsam mit diesen und der Spindel 9 eine gleitende Führung bei der Bewegung des Oberteils 3 gegenüber dem Unterteil 2 her, so daß diese nicht gegeneinander verkanten und sich nicht z.B. in oder entgegen der Richtung der Spindeldrehung gegeneinander verdrehen können.

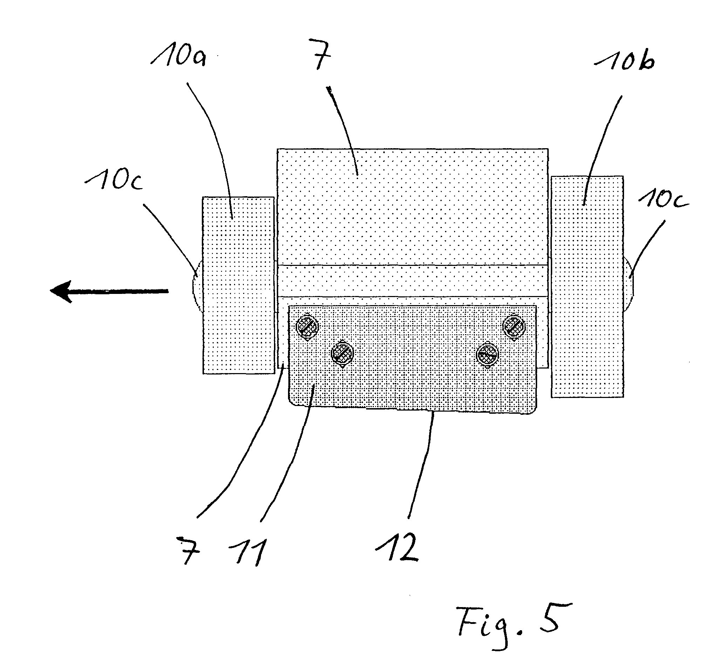

Das Oberteil 3 umfaßt ferner einen Messerhalter 7, der eine erste obere Rolle 10a und eine zweite obere Rolle 10b trägt (Fig. 3, Fig. 5), welche in einer Ausführungsform der Erfindung einen größeren Durchmesser aufweist als die erste obere Rolle 10a (in Fig.5 zur Verdeutlichung übertrieben dargestellt). Der Messerhalter 7 ist in einer bevorzugten Ausführungsform der Erfindung zusammen mit dem oberen Verbindungsstück 4 aus einem Stück gefertigt. In einer anderen Ausführungsform der Erfindung ist der Messerhalter 7 ein separates Bauteil, das am Oberteil 3 befestigt ist.

Die oberen Rollen 10a, 10b sind durch eine zu den unteren Achsen 14c, 15c parallel verlaufende obere Achse 10c miteinander verbunden und voneinander beabstandet. Sie überragen das Oberteil 3 nach unten in Richtung des Rohres und bilden gemeinsam ein Gegenlager 10 (Fig. 3), das zusammen mit den unteren Rollen 14a, 14b, 15a, 15b ein Aufnahmelager 8 für ein Rohr 25 zur Mehrpunktshalterung und Rundführung des Schälwerkzeugs 1 bezüglich des Rohres 25 bildet (Fig. 1).

Der Messerhalter 7 trägt des weiteren ein zwischen den oberen Rollen 10a, 10b angeordnetes Messer 11 (Fig. 3, Fig. 5), dessen Hauptebene parallel zu der die oberen Rollen 10a, 10b verbindende Achse 10c verläuft, das eine Schnittkante 12 aufweist und erfindungsgemäß so angeordnet ist, daß die Schnittkante 12 die oberen Rollen 10a, 10b nach unten in Richtung des Rohres überragt und in der Richtung von der ersten oberen Rolle 10a zur zweiten oberen Rolle 10b gegenüber der Achse des Rohres 25 ein axiales Gefälle aufweist. Hierdurch ist bei der Ausführung einer Rotationsbewegung des erfindungsgemäßen Schälwerkzeuges 1 gegenüber dem Rohr 25 das Entfernen eines Spans von kontrollierter Stärke gewährleistet. Das axiale Gefälle der Schnittkante 12 ist in Fig. 5 zur Verdeutlichung übertrieben dargestellt.

In einer bevorzugten Ausführungsform der Erfindung ist die Hauptebene des Messers 11 im wesentlichen von der Form eines länglichen Trapezes, dessen schräge Seite nach unten in Richtung des Rohres weist, wobei die Höhe des Trapezes überall kleiner ist als seine Breite und die Schnittkante 12 mit der schräg verlaufende Seite des Trapezes zusammenfällt (Fig. 5).

In einer Ausführungsform der Erfindung sind die Übergänge von der Schnittkante 12 zu den an sie angrenzenden Seiten des Trapezes abgerundet (Fig. 5). Die Breite der in einem Arbeitsgang abschälbaren Schicht des Rohres ist im wesentlichen durch die Länge der Schnittkante 12 bestimmt.

In einer Ausführungsform der Erfindung ist das Messer 11 höhenverstellbar am Messerhalter 7 angeordnet, wobei auch das Gefälle der Schnittkante 12 gegenüber der Achse des Rohres 25 verstellbar ist.

Am Oberteil 3 ist eine Stange 19 befestigt, die einen Griff 18 trägt, der als Handgriff zur Ausführung einer Drehbewegung des Schälwerkzeuges 1 um die Achse des Rohres 25 dient. Die Stange 19 dient hierbei zugleich als Hebelarm.

In einer bevorzugten Ausführungsform der Erfindung erfolgt die schraubzwingenartige Verstellung des Unterteils 2 und des Oberteils 3 relativ zueinander durch die Spindel 9, die mit Hilfe des Spanngriffes 16 gedreht werden kann (Fig. 2). Die Spindel 9 weist ein Außengewinde auf, das in das Innengewinde des mittleren Verbindungsstückes 5 eingreift und hierdurch die Krafteinleitung von der Spindel 9 in den Oberteil 3 gewährleistet.

Die Spindel 9 weist in einer bevorzugten Ausführungsform der Erfindung ferner einen zylindrischen Fortsatz 9a auf, welcher das Außengewinde nach unten überragt. Im Übergangsbereich zwischen dem Fortsatz 9a und dem Außengewinde der Spindel 9 befindet sich ein umlaufender Vorsprung 9b, der auf der Oberseite des unteren Verbindungsstückes 6 aufliegt, so daß das Oberteil 3 nicht ohne entsprechende Drehbewegung der Spindel 9 gegenüber dem Unterteil 2 abgesenkt werden kann.

Der zylindrische Fortsatz 9a der Spindel 9 ist in dieser Ausführungsform der Erfindung durch die oben bereits erwähnte vertikale Durchgangsbohrung des unteren Verbindungsstückes 6 durchgeführt und weist im Bereich seines unteren Endes ein parallel zur Spindelachse verlaufendes Innengewinde auf, in das eine Halteschraube 20 eingreift, deren Kopf ein elastisches Bauelement gegen die Unterseite des unteren Verbindungsstückes 6 drückt. In der in Fig. 2 gezeigten bevorzugten Ausführungsform der Erfindung ist das elastische Bauelement ein Tellerfederpaket 20a. In einer anderen Ausführungsform der Erfindung ist das elastische Bauelement eine Druckfeder.

Die Krafteinleitung aus der Spindel 9 in den Unterteil 2 erfolgt in dieser Ausführungsform der Erfindung somit über die Halteschraube 20 und das Tellerfederpaket 20a, so daß der Oberteil 3 entgegen deren Federkraft auch ohne Drehung der Spindel 9 um eine durch den maximalen Hubweg des Tellerfederpaketes 20a begrenzte Strecke gegenüber dem Unterteil 2 angehoben werden kann, so daß sich das Aufnahmelager 8 (Fig. 1) weitet.

Diese Elastizität ist bei der Dosierung der Kraft, mit der durch entsprechendes Drehen des Spanngriffes 16 das Messer 11 auf die Wandung des Rohres 25 aufgebracht wird, und bei der Dosierung der Auflagekraft der Rollen 10a, 10b, 14a, 14b, 15a, 15b auf dem Rohr 25 von Nutzen. Des weiteren ermöglicht diese Elastizität das Abschälen von Rohren von unregelmäßig oder z.B. elliptisch verformter Querschnittsform, da die oberen Rollen 10a, 10b bei der Ausführung einer Rotationsbewegung eines erfindungsgemäßen Schälgerätes 1 um das Rohr 25 unter Ausnutzung dieser Elastizität auch einer verformten Rohroberfläche folgen kann.

Durch Anziehen der Halteschraube 20 gegenüber dem unteren Verbindungsstück 6 kann die Spindel 9 festgeklemmt und damit das Oberteil 3 gegenüber dem Unterteil 2 arretiert werden.

Erfindungsgemäß kann jeder beliebige Bereich des Rohres 25 mit dem Schälwerkzeug 1 bearbeitet werden. Hierzu wird das Rohr 25 so in das Aufnahmelager 8 eingeführt, oder das erfindungsgemäße Schälgerät 1 wird so über das Rohr 25 geschoben, daß sich der abzuschälende Bereich seiner Oberfläche im Bereich des Messers 11 befindet. Anschließend wird das Oberteil 3, gemäß einer bevorzugten Ausführungsform der Erfindung mit Hilfe der Spindel 9, auf das Unterteil 2 abgesenkt.

Ein Verrutschen des erfindungsgemäßen Schälwerkzeuges gegenüber dem Rohr in axialer Richtung wird verhindert, indem durch entsprechendes Drehen des Spanngriffes 16 ein Aufliegen der Rollen 10a, 10b, 14a, 14b, 15a, 15b auf dem Rohr 25 mit hinreichend hoher Auflagekraft gewährleistet wird. Das Messer 11 dringt hierbei in die Wandung des Rohres 25 ein.

Nun wird das erfindungsgemäße Schälwerkzeug 1 gegenüber dem Rohr 25 in einem ersten Drehvorgang um die Rohrachse gedreht, wodurch eine Schicht (Span) definierter Stärke von der Rohroberfläche entsprechend dem Drehwinkel und der Länge der Schnittkante 12 abgeschält wird und eine erste Vertiefung in der Oberfläche der Wandung des Rohrers 25 entsteht. Nach diesem ersten Drehvorgang wird das Messer 11 durch entsprechendes Verstellen der Spindel 9 vom Rohr 25 abgehoben. Anschließend wird das Schälwerkzeug 1 gegenüber dem Rohr 25 um maximal die Länge der Schnittkante 12 in diejenige Richtung verschoben, die in Fig. 3 und Fig. 5 durch einen Pfeil gekennzeichnet sind.

Anschließend wird das Oberteil 3 erneut abgesenkt, bis beide obere Rollen 10a, 10b auf dem Rohr 25 aufsetzen, wobei die erste obere Rolle 10a auf der unbearbeiteten Rohroberfläche, die zweite obere Rolle 10b jedoch innerhalb der ersten Vertiefung aufsetzt, so daß das der zweiten oberen Rolle 10b zugewandte Ende des Messers 11 in den Randbereich der durch den ersten Drehvorgang geschaffenen ersten Vertiefung eindringt.

Durch einen zweiten Drehvorgang, der analog zum oben beschriebenen ersten Drehvorgang ausgeführt wird, entsteht daher eine zweite Vertiefung, welche den in Pfeilrichtung (Fig. 3, Fig. 5) gelegenen Randbereich der ersten Vertiefung weiter vertieft.

Da das Messer 11 erfindungsgemäß so angeordnet ist, daß seine Schnittkante 12 entgegen der Pfeilrichtung gegenüber der Achse des Rohres Gefälle aufweist (Fig. 5), wird die Tiefe der zweiten Vertiefung in Pfeilrichtung abnehmen.

Nach dem zweiten Drehvorgang wird das Messer 11 erneut vom Rohr 25 abgehoben und das Schälwerkzeug 1 wieder gegenüber dem Rohr 25 in Pfeilrichtung (Fig. 3. Fig. 5) verschoben wie oben beschrieben. Anschließend wird das Oberteil 3 erneut abgesenkt, bis beide obere Rollen 10a, 10b auf dem Rohr 25 aufsetzen, wobei die zweite obere Rolle 10b innerhalb der zweiten Vertiefung aufsetzt.

Die Tiefe der zweiten Vertiefung nimmt entgegen der Pfeilrichtung (Fig. 3, Fig. 5) zu, wie oben beschrieben wurde. Der Abstand der innerhalb der zweiten Vertiefung aufsetzenden zweiten oberen Rolle 10b von der Achse des Rohres 25 wächst daher mit zunehmender Wegstrecke der Verschiebung des Schälwerkzeuges 1 in Pfeilrichtung an. Die mittlere Tiefe der durch einen dritten Drehvorgang entstehenden dritten Vertiefung wird daher durch diesen Verschiebungsweg beeinflußt.

Durch entsprechende Wiederholung der beschriebenen Vorgänge kann erfindungsgemäß ein beliebig ausgedehnter Bereich der Oberfläche des Rohres 25 abgeschält werden, wobei durch entsprechende Wahl des jeweiligen Verschiebungsweges in Pfeilrichtung (Fig. 3) die mittlere Tiefe jeder Vertiefung beeinflußt werden kann.

Selbstverständlich kann das Gefälle der Schnittkante 12 des Messers 11 auch in umgekehrter Richtung, d.h. in Pfeilrichtung (Fig. 3, Fig. 5) verlaufen; in diesem Fall ist die Verschiebung des Schälwerkzeuges 1 nach jedem Drehvorgang entgegen der Pfeilrichtung vorzunehmen.

In einer Ausführungsform der Erfindung weist die erste obere Rolle (10a), die sich nahe der in Pfeilrichtung (Fig. 3, Fig. 5) gelegenen Seite des Schälwerkzeuges 1 befindet, einen kleineren Durchmesser auf als die zweite obere Rolle (10b), die sich nahe der gegenüberliegenden Seite des Schälwerkzeuges 1 befindet.

In einer weiteren Ausführungsform der Erfindung weisen die beiden ersten unteren Rollen (14a, 15a), die sich nahe der in Pfeilrichtung (Fig. 3, Fig. 5) gelegenen Seite des Schälwerkzeuges 1 befinden, jeweils einen kleineren Durchmesser auf als die beiden zweiten unteren Rollen (14b, 15b), die sich nahe der gegenüberliegenden Seite des Schälwerkzeuges 1 befinden.

Diese Ausführungsformen der Erfindung erleichtern insbesondere die Schälvorgänge entlang einer größeren Wegstrecke entlang des Rohres jeweils über den vollen Drehwinkel von 360 Grad.

### Gewerbliche Anwendbarkeit:

Die Erfindung ist gewerblich anwendbar z.B. im Bereich der Installationstechnik für Elektrokabel sowie Rohrleitungen, insbesondere Wasser- und Gasleitungen.

### Bezugszeichenliste:

- 1: Schälwerkzeug
- 2: Unterteil
- 2a, b: Seitenwände von 2
- 3: Oberteil
- 3a, b: Seitenwände von 3
- 4: oberes Verbindungsstück
- 5: mittleres Verbindungsstück
- 5a: Bohrung in 5
- 6: unteres Verbindungsstück
- 7: Messerhalter
- 8: Aufnahmelager
- 9: Spindel
- 9a: zylindrischer Fortsatz von 9
- 9b: umlaufender Vorsprung von 9a
- 10: Gegenlager
- 10a, b: erste, zweite vordere Rolle
- 10c: Achse von 10
- 11: Messer
- 12: Schnittkante von 11
- 13a, b: Schlitze in 3a, 3b
- 14a, b: hintere untere Rollen
- 14c: hintere untere Achse
- 15a, b: vordere untere Rollen
- 15c: vordere untere Achse
- 16: Spanngriff
- 18: Griff
- 19: Stange
- 20: Halteschraube
- 20a: Tellerfederpaket
- 21: Schrauben
- 22: Befestigungsschrauben
- 23a, b: Lagerbolzen mit Schraubkopf
- 24a, b: Vorsprünge an 3
- 25: Rohr

## Patentansprüche

1. Schälwerkzeug (1) in Form einer Zwinge, mit einem Messer (11), das eine Schnittkante (12) aufweist, zum Schälen einer äußeren Schicht oder Schichten eines Kabels oder Rohres (25), insbesondere Kunststoffrohr (25) oder kunststoffbeschichtetes Rohr (25), umfassend ein Unterteil (2) mit einem zwei vordere untere Rollen (14a, 14b) und zwei hintere untere Rollen (15a, 15b) aufweisendes Rollenlager und einen gegenüber dem Unterteil (2) schraubzwingenartig verstellbaren Oberteil (3) mit einem Gegenlager (10), welches zusammen mit dem Rollenlager ein Aufnahmelager (8) zur Mehrpunktlagerung und Rundführung des Schälwerkzeugs (1) bezüglich des Kabels oder Rohres (25) bildet,
dadurch gekennzeichnet,
daß das Gegenlager (10) eine erste obere Rolle (10a) und eine von dieser in Längsrichtung des Kabels oder Rohres (25) beabstandete zweite obere Rolle (10b) aufweist, deren Achse mit derjenigen der ersten oberen Rolle (10a) fluchtet, wobei das Messer (11) zwischen den oberen Rollen (10a, 10b) so angeordnet ist, daß seine Hauptebene parallel zu dieser Achse verläuft und die Schnittkante (12) die oberen Rollen (10a, 10b) nach unten in Richtung des Kabels oder Rohres überragt und in der Richtung von der ersten oberen Rolle (10a) zur zweiten oberen Rolle (10b) gegenüber der Achse des Kabels oder Rohres (25) ein Gefälle aufweist.

2. Schälwerkzeug nach Anspruch 1, dadurch gekennzeichnet
daß die zweite obere Rolle (10b) einen größeren Durchmesser aufweist als die erste obere Rolle (10a).

3. Schälwerkzeug nach Anspruch 1, dadurch gekennzeichnet
daß die zweiten unteren Rollen (14b, 15b) jeweils einen größeren Durchmesser aufweisen als die ersten unteren Rollen (14a, 15a).

4. Schälwerkzeug nach Anspruch 1, dadurch gekennzeichnet,
daß das Unterteil (2) Seitenwände (2a, 2b) mit Schlitzen (13a, 13b) konstanter Breite und das Oberteil (3) Vorsprünge (24a, 24b) aufweist oder umgekehrt, welche in die Schlitze (13a, 13b) eingreifen und zusammen mit diesen als Führung bei der schraubzwingenartigen Verstellung des Oberteils (3) gegenüber dem Unterteil (2) dienen.

5. Schälwerkzeug nach Anspruch 1, dadurch gekennzeichnet,
daß die schraubzwingenartige Verstellung des Oberteils (3) gegenüber dem Unterteil (2) mittels einer Spindel (9) erfolgt.

6. Schälwerkzeug nach Anspruch 1 und 5, dadurch gekennzeichnet,
daß die Krafteinleitung aus der Spindel 9 in den Unterteil 2 durch ein elastisches Bauelement erfolgt.

7. Schälwerkzeug nach Anspruch 1 und 6, dadurch gekennzeichnet,
daß das elastische Bauelement eine Druckfeder oder ein Tellefederpaket (20a) ist .

8. Schälwerkzeug nach Anspruch 1, dadurch gekennzeichnet,
daß das Oberteil (3) einen an einer als Hebelarm zur Ausführung einer Drehbewegung dienenden Stange (19) angeordneten Griff (18) aufweist.

9. Schälwerkzeug nach Anspruch 1, dadurch gekennzeichnet,
daß das Messer (11) an einem am Oberteil (3) angeordneten Messerhalter (7) angebracht ist.

10. Schälwerkzeug nach Anspruch 1, dadurch gekennzeichnet,
daß das Messer (11) höhenverstellbar am Oberteil (3) angeordnet ist, so daß die Dicke der durch das Messer (11) abgetragenen Schicht veränderbar ist.

11. Schälwerkzeug nach Anspruch 1, dadurch gekennzeichnet,
daß das Gefälle der Schnittkante (12) des Messers (11) gegenüber der Achse des Kabels oder Rohres (25) verstellbar ist.

12. Schälwerkzeug (1) nach mindestens einem der vorhergehenden Ansprüche, dadurch gekennzeichnet, daß
- das Gegenlager (10) eine erste obere Rolle (10a) und eine von dieser in Längsrichtung des Kabels oder Rohres (25) beabstandete zweite obere Rolle (10b) aufweist, deren Achse mit derjenigen der ersten oberen Rolle (10a) fluchtet, wobei das Messer (11) zwischen den oberen Rollen (10a, 10b) so angeordnet ist, daß seine Hauptebene parallel zu dieser Achse verläuft und die Schnittkante (12) die oberen Rollen (10a, 10b) nach unten in Richtung des Kabels oder Rohres überragt und in der Richtung von der ersten oberen Rolle (10a) zur zweiten oberen Rolle (10b) gegenüber der Achse des Kabels oder Rohres (25) ein Gefälle aufweist,
- die zweite obere Rolle (10b) einen größeren Durchmesser aufweist als die erste obere Rolle (10a) und die zweiten unteren Rollen (14b, 15b) jeweils einen größeren Durchmesser aufweisen als die ersten unteren Rollen (14a, 15a),
- das Unterteil (2) Seitenwände (2a, 2b) mit Schlitzen (13a, 13b) konstanter Breite und das Oberteil (3) Vorsprünge (24a, 24b) aufweist oder umgekehrt, welche in die Schlitze (13a, 13b) eingreifen und zusammen mit diesen als Führung bei der schraubzwingenartigen Verstellung des Oberteils (3) gegenüber dem Unterteil (2) dienen,
- die schraubzwingenartige Verstellung des Oberteils (3) gegenüber dem Unterteil (2) mittels einer Spindel (9) erfolgt und die Krafteinleitung aus der Spindel 9 in den Unterteil 2 durch eine Druckfeder oder ein Tellefederpaket (20a) erfolgt,
- das Oberteil (3) einen an einer als Hebelarm zur Ausführung einer Drehbewegung dienenden Stange (19) angeordneten Griff (18) aufweist,
- das Messer (11) höhenverstellbar an einem am Oberteil (3) angeordneten Messerhalter (7) angebracht ist, so daß die Dicke der durch das Messer (11) abgetragenen Schicht veränderbar ist und
- das Gefälle der Schnittkante (12) des Messers (11) gegenüber der Achse des Kabels oder Rohres (25) verstellbar ist.
